# EUROPEAN PATENT SPECIFICATION

(11) **EP 3 141 810 B1**
(45) Date of publication and mention of the grant of the patent: **09.01.2019**
(21) Application number: 16275120.0
(22) Date of filing: 26.08.2016
(51) Int. Cl.: F21V 17/14, F21S 8/02, F21V 21/04

(54) **LIGHTING ARRANGEMENT**
BELEUCHTUNGSEINRICHTUNG
DISPOSITIF D'ÉCLAIRAGE

(30) Priority: 27.08.2015 US 201562210464 P; 02.12.2015 US 201514956416
(43) Date of publication of application: 15.03.2017
(73) Proprietor: CP IP Holdings Limited, Central Hong Kong (HK)
(72) Inventor: BOULANGER, Dave, Pok Fu Lam (HK); NOWAKOWSKI, Maciej, West Vancouver, British Columbia V7W3C9 (CA)
(74) Representative: Higgs, Jonathan

(56) References cited:
- EP-A1- 3 029 369
- WO-A1-2013/058060
- US-A1- 2009 213 595
- US-A1- 2012 268 894
- US-B1- 6 474 846

## Description

### BACKGROUND

### 1. Field

The present disclosure relates to lighting fixtures operable to emit light.

### 2. Description of Related Prior Art

U.S. Pat. No. 8,376,777 discloses a QUICK MOUNTING DEVICE WITH MODULES. The quick mounting device for appliances is alleged to be quickly and easily engaged and disengaged mechanically without the use of tools.

German patent DE4030077 discloses a Ring assembly for built-in ceiling light fitting. The cover ring (30) is arranged in a decorative design, with a cylindrical wall (31) insertable in the mounting ring, and a collar overlapping the outer edge of the mounting ring in the inserted position. The following elements are arranged at the mounting ring: several recesses (13) open to the outside are distributed parallel to the axis over the circumference, for the radial guiding of holding arms (13b) are guided in formed bearing bushes (15); several slots (21) open at the inside are formed in the cylindrical wall distributed over the circumference, dimensioned for the acceptance of axis parallel strip springs, whereby the slots in the form of tangential slits (20) run out in the region of the upper edge; several tongues (18) provided with catches are distributed uniformly in the cylinder wall over the circumference, which by engaging in openings in the cylinder wall of the cover ring, produce a joint with these. The alleged use/advantage of the mounting ring for inbuilt ceiling lights used in suspended ceiling. Lights can be installed in ceiling opening in most simple manner using apt installation engineered parts.

Lighting assemblies are also known from US2012/268894, US2009/213595, EP3029369, US6474846 and WO2013/058060.

### Deleted.

### SUMMARY

In a broad aspect of the invention there is provided a lighting arrangement according to claim 1. This includes a mounting ring, a luminaire, a plurality of locking arms, and a plurality of posts. The mounting ring can extend along a central longitudinal axis and can have a plurality of mounting apertures and a circular wall. The circular wall can have an inwardly-facing surface encircling the central longitudinal axis and can define a radial boundary of a cavity. The circular wall can also have an outwardly-facing surface opposite to the inwardly-facing surface, with a thickness of the circular wall defined between the inwardly-facing surface and the outwardly-facing surface. The circular wall can extend a height along the central longitudinal axis between a downwardly-facing surface and an upwardly-facing surface. The luminaire can have a housing assembly and a light emitter. The housing assembly can at least partially enclose the light emitter. The housing assembly can be at least partially received in the cavity. The plurality of locking arms can each be fixedly associated with one of the circular wall and the housing assembly. Each of the plurality of locking arms can include an axial portion extending along the central longitudinal axis and a circumferential portion extending about the central longitudinal axis. Each of the circumferential portions can extend from a first end at an intersection with one of the axial portions to a respective second end distal relative to the first end. Each of the circumferential portions can have an upper face directed in the same direction as the upwardly-facing surface and a lower face directed in the same direction as the downwardly-facing surface. The plurality of posts can each be fixedly associated with the other of the circular wall and the housing assembly. Each of the plurality of posts can extend away from the other of the circular wall and the housing assembly along a respective post axis that intersects the central longitudinal axis. A width of each post can be defined in a direction about the central longitudinal axis. The mounting ring and the luminaire can be interconnected by moving each of the plurality posts past each of the plurality of distal ends along the central longitudinal axis and then rotating the mounting ring and the luminaire relative to one another in a first angular direction about the central longitudinal axis and then sliding each of the plurality of posts along one of the upper and lower faces such that the one of the upper and lower faces thereby defines a sliding surface. In a preferred form the plurality of locking arms are fixed with respect to said mounting ring. Preferably said plurality of locking arms project from one of said inwardly-facing surface and said outwardly-facing surface of said circular wall. Most preferably, said plurality of locking arms are defined by said circular wall. In a further form, the lighting arrangement comprises a shade having a collar portion and shading portion. Preferably said collar portion and said shading portion are further defined as flat and coplanar with respect to one another. Also preferably said shade does not extend beyond a flange portion along a central longitudinal axis and does not extend beyond an upwardly-facing surface of a circular wall along said central longitudinal axis.

### BRIEF DESCRIPTION OF THE DRAWINGS

The detailed description set forth below references the following drawings:
Figure 1 is a perspective view of a mounting ring according to an exemplary embodiment of the present disclosure;
Figure 2 is a perspective view of a lighting assembly or luminaire according to an exemplary embodiment of the present disclosure;
Figure 3 is a perspective view of the mounting ring and a covering ring according to an exemplary embodiment of the present disclosure;
Figure 4 is a perspective view of a lighting arrangement according to an exemplary embodiment of the present disclosure;
Figure 5 is a top view of the luminaire shown in Figure 4;
Figure 6 is a top view of the mounting ring shown in Figure 4;
Figure 7 is an exploded view of another exemplary embodiment of the present disclosure;
Figure 8 is a perspective assembly view the exemplary embodiment of the present disclosure shown in Figure 7;
Figure 9 is a side profile view of a locking arm of the exemplary embodiment of the present disclosure shown in Figures 7 and 8 from the perspective of a central longitudinal axis;
Figure 10 is a side profile view of a locking arm of another exemplary embodiment of the present disclosure;
Figure 11 is a side profile view of a locking arm of another exemplary embodiment of the present disclosure;
Figure 12 is a side profile view of a locking arm of another exemplary embodiment of the present disclosure;
Figure 13 is a first, partially-exploded view of a lighting assembly according to another exemplary embodiment of the present disclosure;
Figure 14 is a second, more fully exploded view of the lighting assembly shown in Figure 13;
Figure 15 is a partially-exploded view of a lighting assembly according to another exemplary embodiment of the present disclosure;
Figure 16 is a top-down view of a portion of the structures shown in Figures 7-9;
Figure 17 is a perspective view of the structures shown in Figures 7 - 9 being coupled with a first shade;
Figure 18 is a partial cross-section of the structures shown in Figures 7 - 9 coupled with the first shade in a plane containing a central longitudinal axis; and
Figure 19 is a perspective view of the structures shown in Figures 7 - 9 being coupled with a second shade.

### DETAILED DESCRIPTION

A plurality of different embodiments of the present disclosure is shown in the Figures of the application. Similar features are shown in the various embodiments of the present disclosure. Similar features across different embodiments have been numbered with a common reference numeral and have been differentiated by an alphabetic suffix or an apostrophe. Also, to enhance consistency, the structures in any particular drawing share the same alphabetic suffix even if a particular feature is shown in less than all embodiments. Similar features are structured similarly, operate similarly, and/or have the same function unless otherwise indicated by the drawings or this specification. Furthermore, particular features of one embodiment can replace corresponding features in another embodiment or can supplement other embodiments unless otherwise indicated by the drawings or this specification.

The present disclosure, as demonstrated by the exemplary embodiments described below, can provide lighting arrangements that do not require an installer to make additional holes into the ceiling or wall mounting location. Lighting arrangements according to one or more embodiments of the present disclosure can attach directly into a standard junction box used in building construction. Lighting arrangements according to one or more embodiments of the present disclosure can be comprised of components that are attached together without the need for tools.

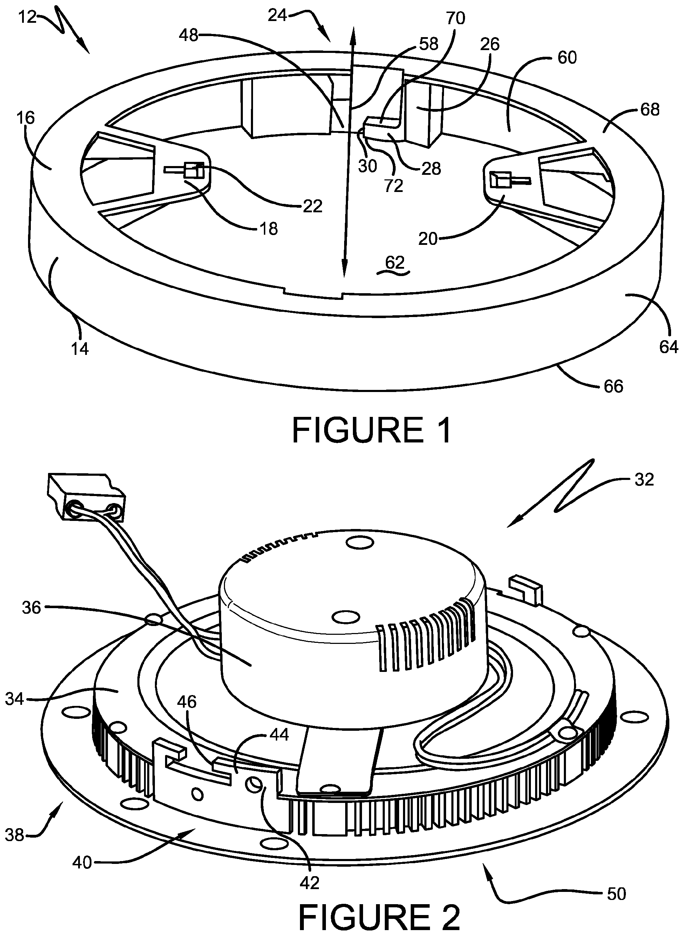

Figure 1 is a perspective view of a mounting ring 12 according to an exemplary embodiment of the present disclosure. The mounting ring 12 can extend along a central longitudinal axis 58. The mounting ring 12 can include a cylindrical portion or circular wall 14 and a disk portion 16. Mounting tabs or projections 18, 20 can be engaged with the cylindrical portion 14 through the disk portion 16. The circular wall 14 can interconnect the plurality of tabs 18, 20. Each mounting projection 18, 20 can include a mounting aperture, such as aperture 22, configured to receive a threaded fastener for attaching the mounting ring 12 to a junction box (shown in other figures). As shown in Figure 1, the mounting apertures, such as aperture 22, are defined in horizontal plane. The circular wall 14 can have an inwardly-facing surface 60 encircling the central longitudinal axis 58, defining a radial boundary of a cavity 62. The circular wall 14 can also have an outwardly-facing surface 64 opposite the inwardly-facing surface 60 with a thickness defined radially, between the inwardly-facing surface 60 and the outwardly-facing surface 64. The circular wall 14 can extend a height along the central longitudinal axis 58 between a downwardly-facing surface 66 and an upwardly-facing surface 68.

The mounting ring 12 can also include one or more locking arms 24 fixedly associated with the circular wall. In other embodiments, the arms could be fixedly associated with the luminaire described below. The exemplary locking arms 24 project radially-inward from the inwardly-facing surface 60 of the cylindrical portion 14. The locking arm 24 can include an axial portion 26 extending along the axis 58 and a circumferential portion 28 extending about the axis 58. Each of the plurality of circumferentially-extending locking arms 24 can project from the circular wall 14 radially relative to the central longitudinal axis 58. Each of the circumferential portions 28 can extend from a first end at an intersection with one of the axial portions 26 to a respective second end 30 distal relative to the first end. Each of the circumferential portions 28 can have an upper face 70 and a lower face 72. Each face 70, 72 may be defined by a plurality of discrete surfaces in one or more implementations of the present disclosure.

Figure 2 is a perspective view of a lighting assembly or luminaire 32 according to an exemplary embodiment of the present disclosure. The lighting assembly 32 can include a housing assembly 34 containing light emitters and circuitry for driving the light emitters, including any power and ac/dc conversion circuitry. Some circuitry can be mounted in a housing 36 attached to the housing assembly 34, such as transformer. The housing 36 can be sized to fit within a junction box. The housing assembly 34 can be sized to be at least partially received in the cavity 62.

The housing assembly 34 can be fixedly engaged with a plurality of posts 40. Each of the plurality of posts 40 can extend away from the housing assembly 34 along the axis 58. The posts 40 could extend from the circular wall in other embodiments of the present disclosure and locking arms could be fixedly engaged with the housing assembly 34. Each of the plurality of posts can be fixedly associated with one of the circular wall 14 and the luminaire 32. Each of the plurality of posts 40 can extend away the structure to which it is fixedly mounted along a respective post axis that intersects the central longitudinal axis 58. A width of each post 40 can be defined in a direction about the central longitudinal axis 58.

The housing assembly 34 and housing 36 can be interconnected to one another through a covering ring 38 of the exemplary lighting assembly 32. The covering ring 38 defines the posts 40. Each of the exemplary posts 40 can have an axial portion 42 and a circumferential portion 44. The circumferential portion 44 projects transverse to the axial portion 42 to a distal end 46. The exemplary posts 40 extend away the structure to which they are fixedly mounted along a respective post axis that extend about the central longitudinal axis 58.

After the mounting ring 12 has been mounted to a junction box at the desired location for lighting, the lighting assembly 32 can be received in the circular wall 14 to form the lighting arrangement 10. The mounting ring 12 and the luminaire 32 can be interconnected by moving each of the plurality posts 40 past each of the plurality of distal ends 30 along the central longitudinal axis 58 and rotating the mounting ring 12 and the luminaire 32 relative to one another in a first angular direction about the central longitudinal axis 58. The axial portion 44 can be received in a gap referenced at 48. The lighting assembly 32 can then be rotated relative to the mounting ring 12 until the distal end 46 contacts the axial portion 26 and/or until the distal end 30 contacts the axial portion 42. The mounting ring 12 and the lighting assembly 32 are thus assembled for use and an exemplary lighting arrangement is formed. A surface referenced at 50 of the covering ring 38 conceals the mounting ring 12 from view.

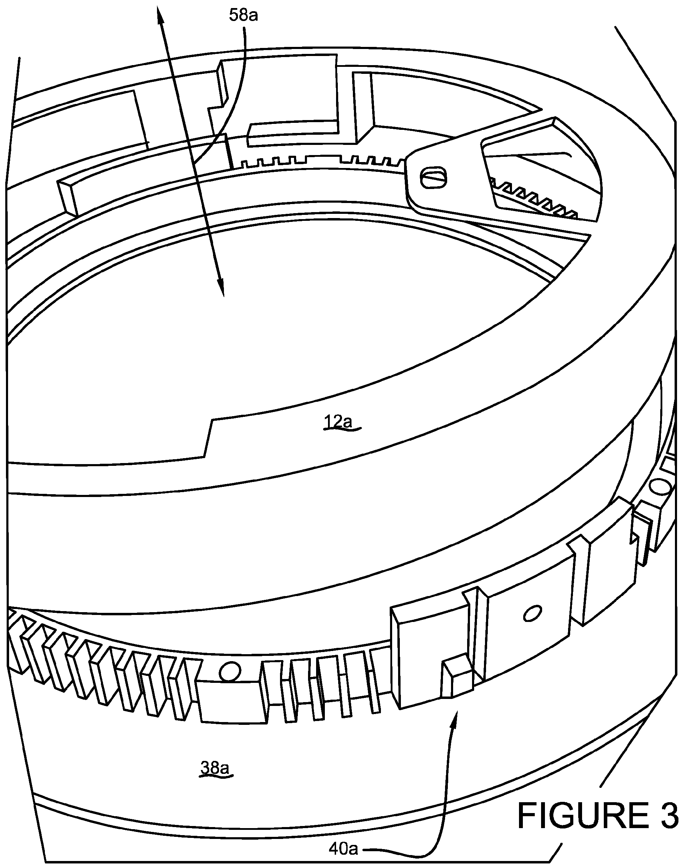

Figure 3 is a perspective view of a mounting ring 12a and a covering ring 38a in the process of being assembled according to an exemplary embodiment of the present disclosure. The remaining portions of the housing assembly have been omitted to better display the structures of the mounting ring 12a and the covering ring 38a. The post 40 has been replaced with a post 40a in the form of a polygonal tab. The post 40a extends radially outward relative to a central longitudinal axis 58a along an axis that intersects the axis 58a, rather than about the central longitudinal axis 58 like the posts 40.

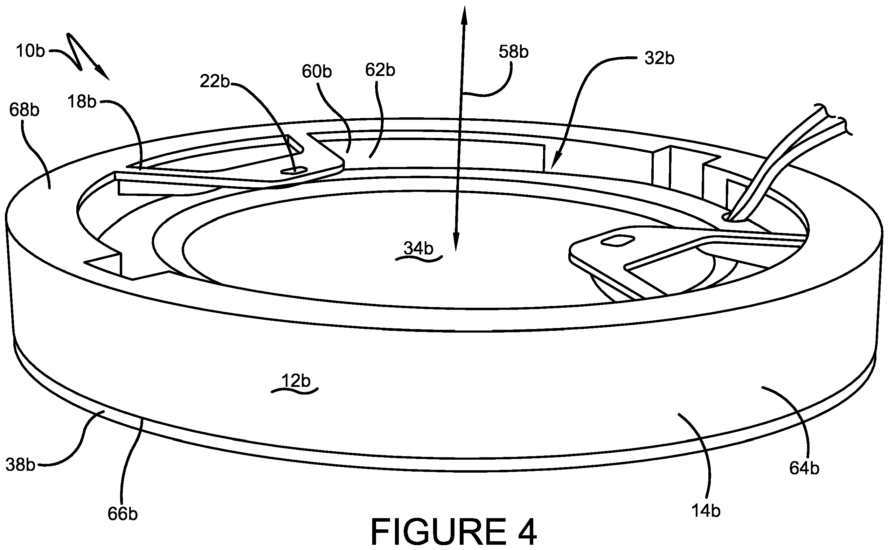

Figure 4 is a perspective view of a lighting arrangement 10b according to an exemplary embodiment of the present disclosure. The lighting arrangement 10b includes a mounting ring 12b. A covering ring 38b is also illustrated. The lighting arrangement 10b includes an alternative housing assembly 34b that does not protrude above the mounting ring 12b. The housing assembly 34b can include all of the components contained in the housing assembly 36 and the housing 36 of the first embodiment. The lighting arrangement 10b includes an embedded driver arrangement as disclosed in of pending United States Patent Application Serial No. 14/986,760 (published as US2016/0195669) for a LIGHTING ARRANGEMENT, filed on 04-JAN-2016.

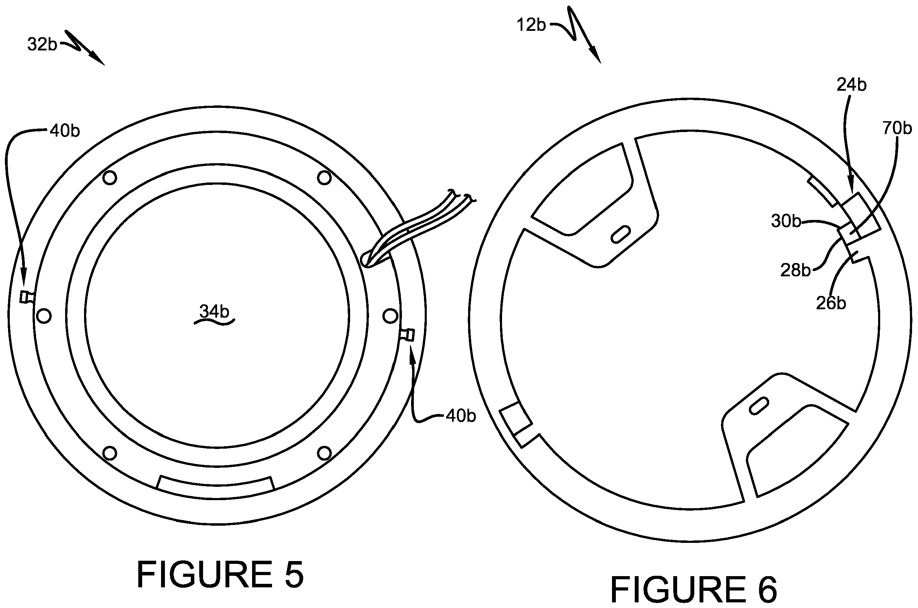

Figure 5 is a top view of a lighting assembly or luminaire 32b according to an exemplary embodiment of the present disclosure. The exemplary lighting assembly 32b is a component of the exemplary lighting arrangement 10b shown in Figure 4. Figure 6 is a top view of the mounting ring 12b according to an exemplary embodiment of the present disclosure.

With reference to Figures 4 - 6, the mounting ring 12b can extend along a central longitudinal axis 58b and have a plurality of tabs, such as tab 18b. The mounting ring 12b can also have a circular wall 14b and a plurality of locking arms 24b. Each of the plurality of tabs 18b can define a mounting aperture, such as mounting aperture 22b. The circular wall 14b can interconnect the plurality of tabs 18b. The circular wall 14b can have an inwardly-facing surface 60b encircling the central longitudinal axis 58b and defining a cavity 62b. The circular wall 14b can also have an outwardly-facing surface 64b opposite the inwardly-facing surface 60b with a thickness defined radially between the inwardly-facing surface 60b and the outwardly-facing surface 64b. The circular wall 14b can extend a height along the central longitudinal axis 58b between a downwardly-facing surface 66b and an upwardly-facing surface 68b.

It is noted that "downwardly" and "upwardly" are used herein for reference and are not limiting on the scope of the present disclosure and possible embodiments thereof.

Each of the plurality of circumferentially-extending locking arms 24b can project from the circular wall 14b radially relative to the central longitudinal axis 58b. Each of the plurality of locking arms 24b can include an axial portion 26b extending along the central longitudinal axis 58b and a circumferential portion 28b extending about the central longitudinal axis 58b. Each of the circumferential portions 28b can extend from a first end at an intersection with one of the axial portions 26b to a respective second end 30b distal relative to the first end. Each of the circumferential portions 28b can have an upper face 70b and a lower face (not visible in Figures 4 - 6). At least one of the faces can be defined by a plurality of discrete surfaces in one or more implementations of the present disclosure.

The luminaire 32b can include the housing assembly 34b, one or more light emitters (not visible), and a plurality of posts 40b. The housing assembly 34b can at least partially enclose the light emitter. The exemplary housing assembly 34b can be fully received in the cavity 62b. Each of the plurality of posts 40b can extend away from the housing assembly 34b. The width of each post 40b can be defined in a direction about the axis 58b. The mounting ring 12b and the luminaire 32b can be interconnected by moving each of the plurality posts 40b past each of the plurality of distal ends 30b along the central longitudinal axis 58b and rotating the mounting ring 12b and the luminaire 32b relative to one another in a first angular direction about the central longitudinal axis 58b.

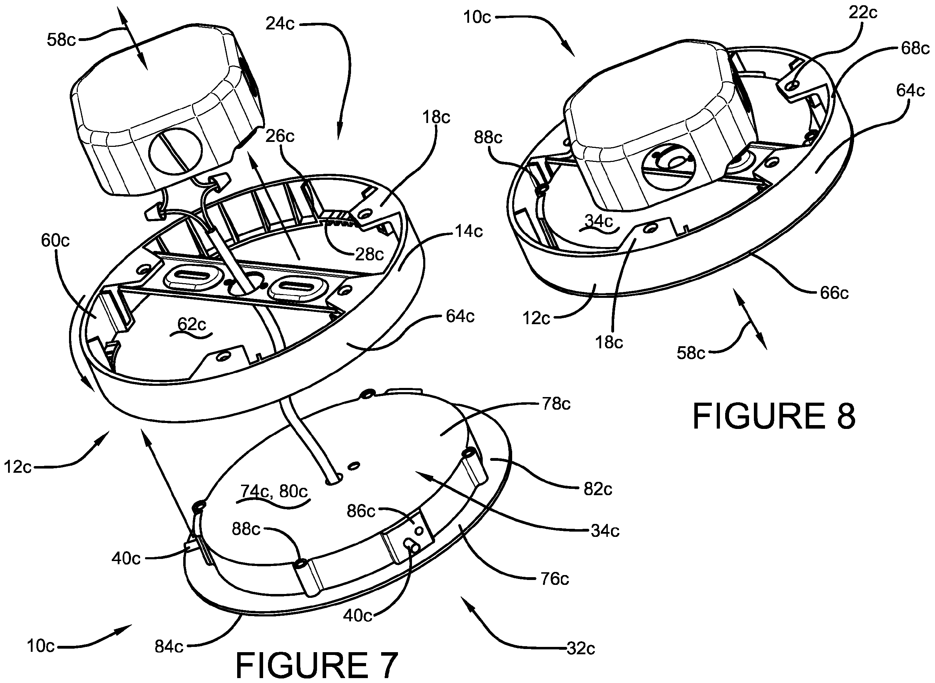

In other embodiment of the present disclosure, shown in Figures 7 - 9, a lighting arrangement 10c can include a mounting ring 12c and a luminaire 32c. The mounting ring 12c can extend along a central longitudinal axis 58c and have a plurality of tabs 18c. The mounting ring 12c can be affixed to a junction box 65c, which can be mounted above a ceiling and be accessible through a hole in the ceiling. The mounting ring 12c can also have a circular wall 14c and a plurality of locking arms 24c. The mounting ring 12c can be received in the hole in the ceiling and be flush with the ceiling or can be positioned on the surface of the ceiling. Each of the plurality of tabs 18c can define a mounting aperture 22c. The circular wall 14c can interconnect the plurality of tabs 18c. The circular wall 14c can have an inwardly-facing surface 60c encircling the central longitudinal axis 58c and defining a cavity 62c. The circular wall 14c can also have an outwardly-facing surface 64c opposite the inwardly-facing surface 60c with a thickness defined between the inwardly-facing surface 60c and the outwardly-facing surface 64c. The circular wall 14c can extend a height along the central longitudinal axis 58c between a downwardly-facing surface 66c and an upwardly-facing surface 68c.

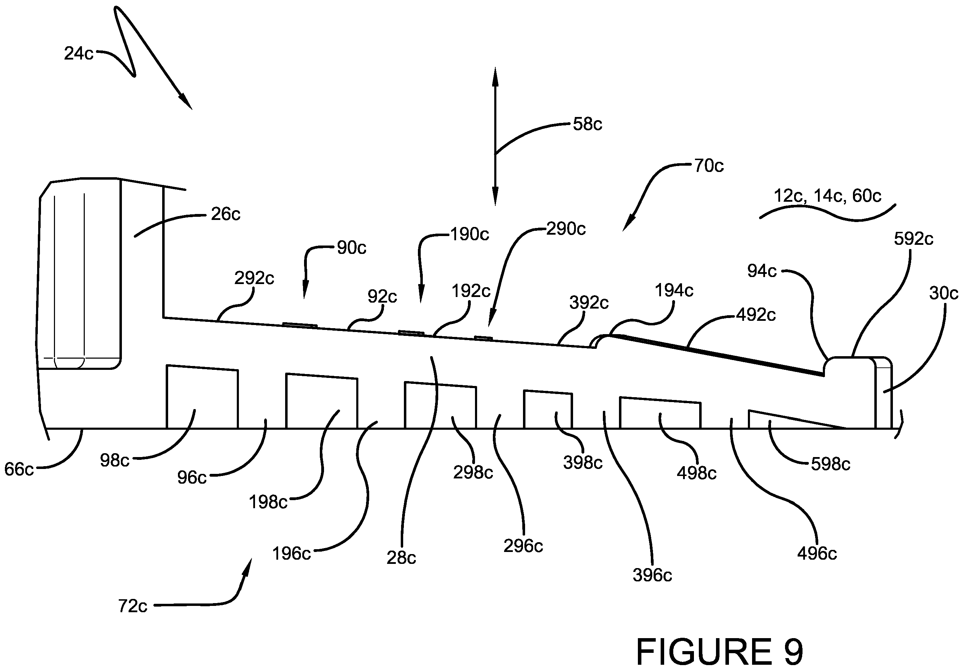

As best shown in Figure 9, each of the plurality of circumferentially-extending locking arms 24c can project from the circular wall 14c radially relative to the central longitudinal axis 58c. The exemplary arms 24c project radially inward, but could project radially outward in other implementations of the present disclosure or could be defined by the circular wall 14. Each of the plurality of locking arms 24c can include an axial portion 26c extending along the central longitudinal axis 58c and a circumferential portion 28c extending about the central longitudinal axis 58c. Each of the circumferential portions 28c can extend from a first end at an intersection with one of the axial portions 26c to a respective second end 30c distal relative to the first end. Each of the circumferential portions 28c can have an upper face 70c and a lower face 72c. One or both of the faces 70c, 72c can be defined by a plurality of discrete surfaces in one or more implementations of the present disclosure.

The luminaire 32c can include a housing assembly 34c and a light emitter and a plurality of posts 40c. The housing assembly 34c can at least partially enclose the light emitter. The light emitter can be one or more light emitting diode, such as shown in other embodiments set forth herein. The exemplary housing assembly 34c can be fully received in the cavity 62c. Each of the plurality of posts 40c can extend away from the housing assembly 34c. The mounting ring 12c and the luminaire 32c can be interconnected by moving each of the plurality posts 40c past each of the plurality of distal ends 30c along the central longitudinal axis 58c and rotating the mounting ring 12c and the luminaire 32c relative to one another in a first angular direction about the central longitudinal axis 58c.

The exemplary housing assembly 34c can include a body portion 74c and a flange portion 76c. The body portion 74c can extend between top end 78c and a bottom end 80c along the central longitudinal axis 58c. The exemplary body portion 74c is fully disposed in the cavity 62c. The body portion 74c can extend along the central longitudinal axis 58c between the downwardly-facing surface 66c of the circular wall 14c and the plurality of tabs 18c. The body portion 74c can have a variable thickness, with thicker portions (such as referenced at 86c) surrounding each of the plurality of posts 40c. The flange portion 76c can extend radially-outward from the body portion 74c and have an upwardly-facing surface 82c and a downwardly-facing surface 84c. The upwardly-facing surface 82c of the flange portion 76c can abut and contact the downwardly-facing surface 66c of the circular wall 14c around a continuous circumference about the central longitudinal axis 58c in some implementations, as shown in Figure 8. A diameter of the flange portion 76c can be substantially equal to a diameter of the outwardly-facing surface 64c of the circular wall 14c and thus flush with the outwardly-facing surface 64c.

The exemplary housing assembly 34c can also include a canister portion positioned in the body portion 74c. The light emitters can be disposed in the canister portion. The canister portion and the body portion 74c can be interconnected with fasteners 88c.

Figure 9 is a side profile view of the locking arm 24c from the perspective of the central longitudinal axis 58c. As shown, the exemplary upper face 70c defines a profile having a plurality of discrete surfaces. The illustration of the profile 24c shows a series of notched edges, a plurality of distinct surfaces delineated by distinct edges. The exemplary edges are defined by a plurality of protuberances 90c, 190c, 290c, with planar surface portions 92c, 192c defined between adjacent pairs of protuberances and other planar surface portions 292c, 392c, 492c, 592c.

The posts 40c can ride along the upper face 70c during assembly of the lighting arrangement 10c. The engagement between the posts 40c and the protuberances 90c, 190c, 290c and the surfaces 92c, 192c, 292c, 392c, 492c, 592c provide the assembler (typically a consumer) tactile and/or audible detection of connection during relative rotation between the lighting arrangement 32c and the mounting ring 12c. This allows the assembler to feel the progress of assembly. Further, the arrangement of the protuberances 90c, 190c, 290c and the surfaces 92c, 192c, 292c, 392c, 492c, 592c allow the lighting arrangement 32c to be positioned in a plurality of different angular positions relative to the mounting ring 12c. The post 40c can be stably maintained between two of the protuberances 90c, 190c, 290c or against one of the protuberances 90c, 190c, 290c.

In the Figures, the lighting arrangement 32c is unadorned, but embodiments can be practiced with decorative features and indicia and a precise angular of the lighting arrangement 32c relative to the mounting ring 12c can be desirable. Engagement between the posts 40c and the protuberances 90c, 190c, 290c can generate a click or another noise so that the assembler is advised of progress or advised of one possible "final" position for the lighting arrangement 32c. For example, the first click can inform the assembler that the lighting arrangement 32c is acceptably engaged with the mounting ring 12c. The assembler can further rotate the lighting arrangement 32c if desired. Embodiments can include more than three protuberances 90c, 190c, 290c. The gaps between protuberances 90c, 190c, 290c (the circumference length of the surface portions 92c, 192c) can be constant or variable. For example, the gaps between protuberances 90c, 190c, 290c (defined by the angular length of surface areas 92c, 192c, 292c, 392c) can shorten as rotation of the lighting arrangement 32c progresses.

The upper face 70c can also include a plurality of surface portions 94c, 194c that are concave relative to the first angular direction. The exemplary surface portions 94c, 194c are rounds to allow the posts 40c (and luminaire 32c) to gently transition during sliding between surfaces at different heights. The direction of rotation and movement of the posts 40c during assembly for an exemplary embodiment is referenced at 95c. Specifically, in one or more embodiments, the mounting ring 12c can be fixed and the lighting arrangement 32c can be rotated in the direction 95c to engage the lighting arrangement 32c with the mounting ring 12c. The post 40c can ride along the surface portion 592c of the upper face 70c during assembly of the lighting arrangement 10c and ride over the surface portion 94c which is concave relative to the direction 95c. The movement of the post 40c over the surface portion 94c can generate a pronounced click or hand-feel (tactile indication). The concave surface portions 94c, 194c along with the protuberances 90c, 190c, 290c can cause different noises or tactile sensations that can assist the assembler during assembly. The surface portion 94c is downstream of the flat surface portion 592c. The surface portion 194c is fed by the ramp surface portion 492c. Thus, the order of flat, ramped and concave surface portions can be varied to simplify installation for the assembler.

The lower face 72c of the locking arm 24c defines a stepped profile. The stepped profile includes a plurality of steps 96c, 196c, 296c, 396c, 496c and a plurality of gaps 98c, 198c, 298c, 398c, 498c, 598c between adjacent steps. The circumferential width of the steps 96c, 196c, 296c, 396c, 496c can be variable or constant. The circumferential width of the gaps 98c, 198c, 298c, 398c, 498c, 598c can be variable or constant. It can be desirable to vary the circumferential widths in that variation can provide an indication of the distal end 30 for the assembler. The mounting ring 12c can be installed in a wall or ceiling and the pattern of steps and gaps can provide an indication to the assembler of the location of the locking arms 24c. In the exemplary embodiment, the widths of gaps 498c and 598c are greater than the width of gaps 98c, 198c, 298c, and 398c. Further the width of gap 398c is less than the widths of the remaining gaps 198c, 298c, 398c, 498c, 598c. The mounting ring 12c can be formed such that downwardly-facing surface 66c is planar and uninterrupted except for the pattern of gaps 98c, 198c, 298c, 398c, 498c, 598c to assist the assembler in quickly and easily identifying the location for inserting the posts 40c.

The arrangement of the steps 96c, 196c, 296c, 396c, 496c and the gaps 98c, 198c, 298c, 398c, 498c, 598c renders the thickness of the plurality of locking arms 24, as defined along the central longitudinal axis 58c, to be variable. This allows for some bending of the locking arm 24c during installation. Bending of the locking arm 24c can enhance the tactile or noise response when the posts 40c engage features of the upper face 70c.

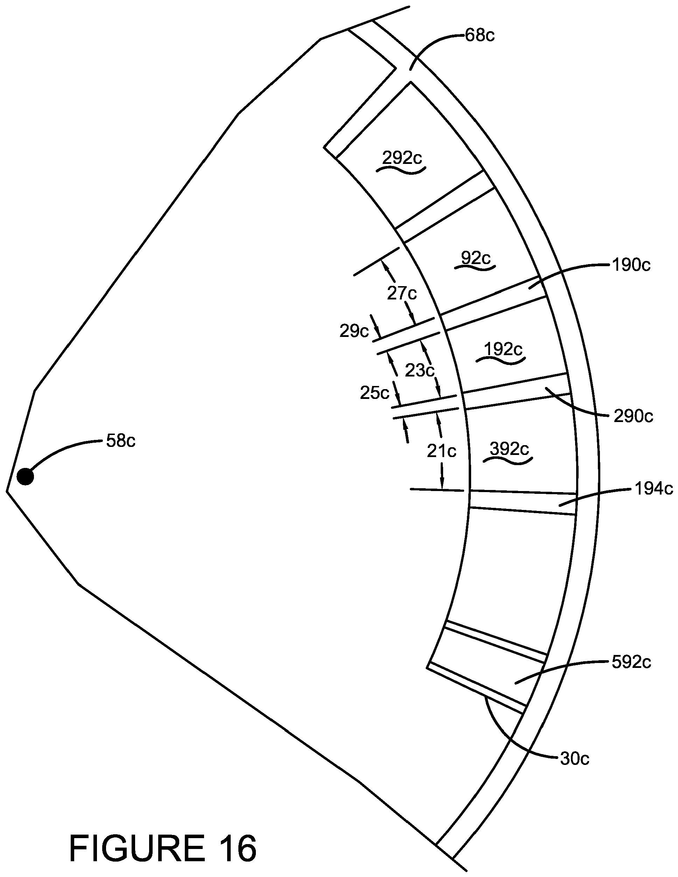

The post 40c slides along the upper face 70c when the luminaire 32c and the mounting ring 12c are interconnected. The exemplary sliding surface defined by upper face 70c includes a first area that has been referenced already as surface 392c. The first area can be substantially flat (as well as slightly ramped) in side profile (shown in Figure 9) and extends a first arcuate length about the central longitudinal axis 58c. The first arcuate length is referenced at 21c in Figure 16. The exemplary sliding surface defined by upper face 70c also includes a second area that has been referenced already as surface 192c. The second area can be substantially flat in side profile and extends a second arcuate length about the central longitudinal axis 58c. The second arcuate length is referenced at 23c in Figure 16.

The exemplary sliding surface defined by upper face 70c also includes at least one protuberance creating a gap between the first area and the second area. A protuberance is a structural feature, more than an edge line, as it defines a gap between the first and second areas. In various embodiments of the present disclosure, a protuberance can be positive or negative. A positive protuberance can extend above and can be elevated over the first area and the second area with respect to the central longitudinal axis 58c. A negative protuberance could extend below and be vertically recessed with respect to the first area and the second area relative to the central longitudinal axis 58c.

Referring now to Figure 16, a protuberance has already been referenced at 290c. The exemplary protuberance 290c is positive. The protuberance 290c can extend a third arcuate length about the central longitudinal axis 58c and is referenced at 25c. The third arcuate length 25c is less than both of the first arcuate length 21c and the second arcuate length 23c.

The exemplary sliding surface defined by upper face 70c also includes a third area that has been referenced already as surface 92c. The third area can be substantially flat in side profile and can extend a fourth arcuate length about the central longitudinal axis 58c. The fourth arcuate length is referenced at 27c.

The exemplary sliding surface defined by upper face 70c also includes a second protuberance that has been referenced already at 190c. The exemplary protuberance 190c is positive and extends a fifth arcuate length about the central longitudinal axis 58c. The fifth arcuate length is referenced at 29c. The exemplary fifth arcuate length 29c is less than both of the second arcuate length 23c and the fourth arcuate length 27c.

The post 40c is configured to be capable of sliding over the first area 392c, the protuberance 290c, the second area 192c, the protuberance 190c, and the third area 92c when the luminaire 32c and the mounting ring 12c are interconnected. Of course, the extent that the post 40c slides across the upper face 70c is at the discretion of the user. When the post 40c encounters and slides across one of the protuberances 190c, 290c as the luminaire 32c is being engaged with the mounting ring 12c, the user will feel the contact and/or hear a click.

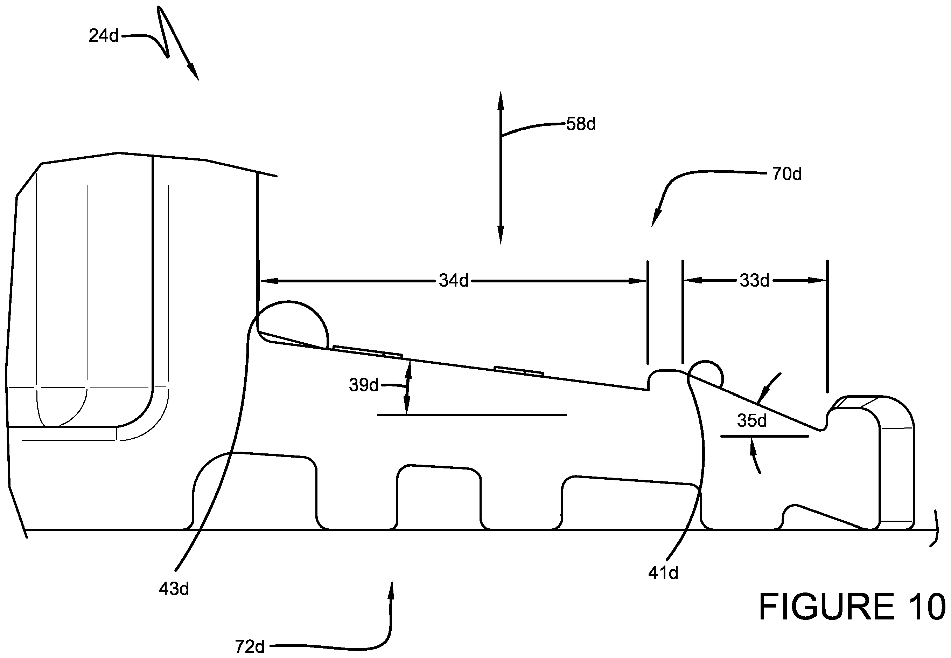

Figure 10 is a side profile view of a locking arm 24d of another exemplary embodiment of the present disclosure from the perspective of a central longitudinal axis 58d. The locking arm 24d includes an upper face 70d and a lower face 72d. The upper face 70d defines a plurality of discreet planar surfaces with protuberances defined between the surfaces. The locking arm 24d defines a more compact upper face 70d than the upper face 70c.

The upper face 70d includes a first ramp portion 41d and a second ramp portion 43d. The first ramp portion 41d has a first rate of incline and extends about the central longitudinal axis 58d a first angular distance 33d. It is noted that from the perspective of Figure 10 (taken from the axis 58d) the angular distance appears straight and not angular, but would appear angular if viewed from above, such as the perspective of Figure 16. The first rate of incline is referenced at 35d. The second ramp portion 43d has a second rate of incline and extends about the central longitudinal axis 58d a second angular distance 37d. The second rate of incline is referenced at 39d. In the exemplary embodiment, the second rate 39d of incline is less than the first rate 35d of incline and the first angular distance 33d is less than the second angular distance 37d. A post engages the first ramp portion 41d before the second ramp portion 43d during assembly of a luminaire to a mounting ring. This variation in ramp incline and angular distance communicates to the installer an extent of connection. The shorter, steeper ramp conveys to the installer that the mounting ring and luminaire are substantially interconnected while the longer, gentler ramp allows for fine-tuning of the position of the luminaire relative to mounting ring and to the operating environment.

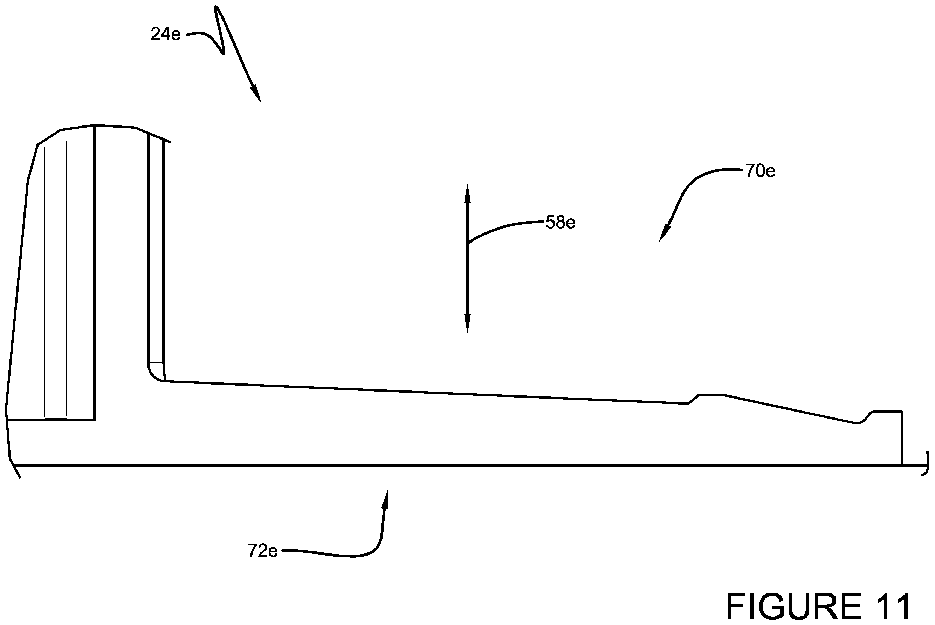

Figure 11 is a side profile view of a locking arm 24e of another exemplary embodiment of the present disclosure from the perspective of a central longitudinal axis 58e. The locking arm 24e includes an upper face 70e and a lower face 72e. The upper face 70e defines a plurality of discreet planar surfaces with edges defined between the surfaces. The upper face 70e does not include protuberances but is longer than the upper face 70c and defines ramped surface portions of smaller slope that the ramp surface portions 392c, 492c of the upper face 70c. This profile can be desirable in that it provides a surface more amenable to infinite, stable positioning, since the posts cannot be positioned on the precise edges of protuberances and steep ramps can tend to permit the posts to slide down the ramp surface, albeit slowly over time.

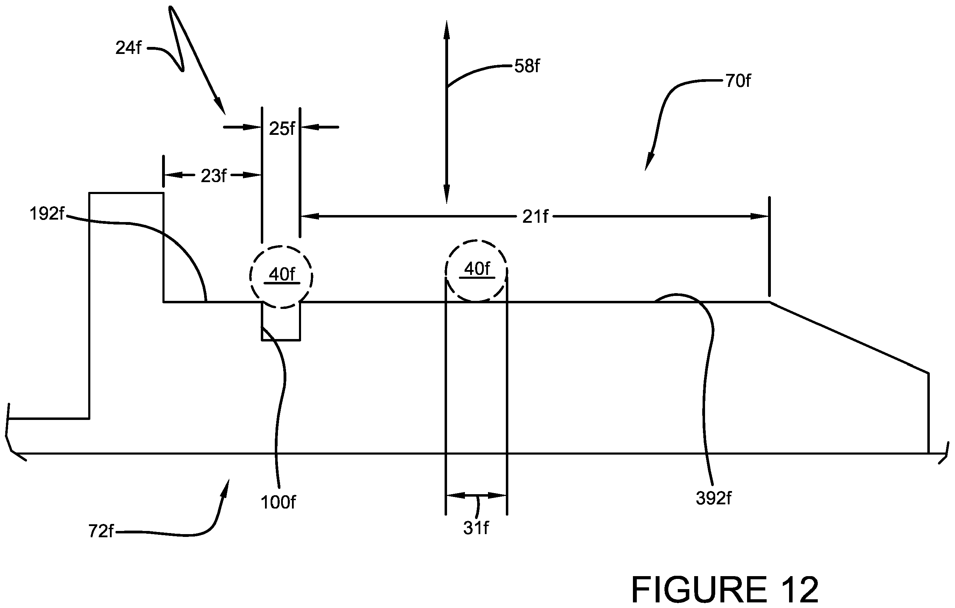

Figure 12 is a side profile view of a locking arm 24f of another exemplary embodiment of the present disclosure from the perspective of a central longitudinal axis 58f. The locking arm 24f includes an upper face 70f and a lower face 72f. The upper face 70f defines a plurality of discreet planar surfaces with a protuberance defined between the surfaces.

A post 40f (shown in phantom in two different positions) can have a width 31f and slide along the upper face 70f when a luminaire and a mounting ring are interconnected. The exemplary sliding surface defined by upper face 70f includes a first area 392f. The first area 392f can be substantially flat in side profile (and non-ramped) and extend a first arcuate length about the central longitudinal axis 58f. The first arcuate length is referenced at 21f. The exemplary sliding surface defined by upper face 70f also includes a second area 192c. The second area can be substantially flat in side profile and extend a second arcuate length 23f about the central longitudinal axis 58c.

The upper face 70f also defines a negative protuberance 100f for receiving and releasibly capturing the post 40f. The protuberance 100f can create a gap between the first area 392f and the second area 192f, the gap defined by the width of the protuberance 100f. The exemplary negative protuberance 100f extends below and is vertically recessed with respect to the first area 392f and the second area 192f relative to the central longitudinal axis 58f. The protuberance 290f can extend a third arcuate length (a width) about the central longitudinal axis 58f and referenced at 25f. The third arcuate length 25f is less than both of the first arcuate length 21f and the second arcuate length 23f.

The post 40f is configured to slide over the first area 392f and "drop" partially into the protuberance 100f when the luminaire and the mounting ring are interconnected. The user will sense when this occurs, since the luminaire will drop slightly. The width 31f of the post 40f is greater than the third arcuate length 25f, so the post 40f will not fully drop into the negative protuberance 100f. In other embodiments, a plurality of negative protuberances could be defined in the upper face 70f.

Referring again to Figures 7 - 9, the exemplary posts 40c extend only radially outward from the central longitudinal axis 58c. Alternatively, the posts 40 of the embodiment show in Figures 1 and 2 extend in multiple directions relative to the central longitudinal axis 58. The posts 40 extend upward along the central longitudinal axis 58 a first predetermined distance and circumferentially a second predetermined distance about the central longitudinal axis 58.

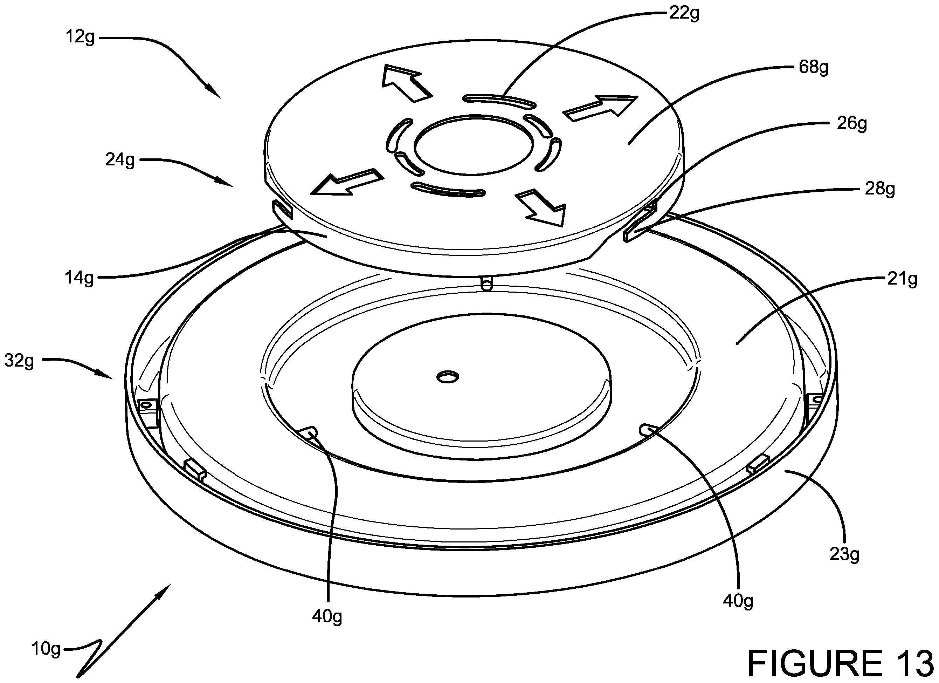

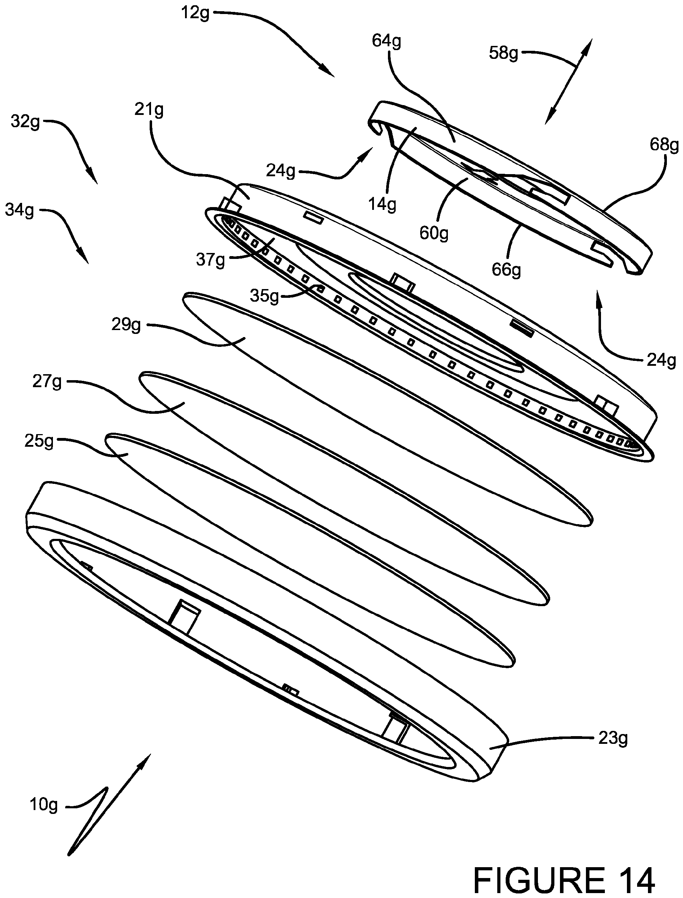

Figures 13 and 14 are perspective views of another embodiment of the present disclosure. A lighting arrangement 10g can include a mounting ring 12g extending along a central longitudinal axis 58g. The mounting ring 12g can have a plurality of mounting apertures, such as aperture 22g. The mounting ring 12g can also have a circular wall 14g and a plurality of locking arms 24g.

The circular wall 14g can have an inwardly-facing surface 60g encircling the central longitudinal axis 58g and defining a cavity. The circular wall 14g can also have an outwardly-facing surface 64g opposite the inwardly-facing surface 60g with a thickness defined between the inwardly-facing surface 60g and the outwardly-facing surface 64g. The circular wall 14g can extend a height along the central longitudinal axis 58g between a downwardly-facing surface 66g and an upwardly-facing surface 68g.

Each of the plurality of locking arms 24g can be fixedly associated with the circular wall 14g. The plurality of exemplary locking arms 24g are defined in the circular wall 14g, rather than projecting radially from the circular wall 14g. Each of the plurality of locking arms 24g including an axial portion 26g extending along the central longitudinal axis 58g and a circumferential portion 28g extending about the central longitudinal axis 58g. Each of the circumferential portions 28g can extend from a first end at an intersection with one of the axial portions 26g to a respective second end distal relative to the first end. Each of the circumferential portion 28gs having an upper face and a lower face.

The lighting arrangement 10c can include a luminaire 32g having a housing assembly 34g and at least one light emitter and a plurality of posts 40g. The housing assembly 34g at least partially enclose the light emitter. The housing assembly 34g can be at least partially received in the cavity. Each of the plurality of posts 40g can extend away from the housing assembly 34g.

The exemplary light emitter can be defined by a plurality of light emitting diodes, such as diode 35g, that can be disposed about a perimeter wall 37g of a pan 21g. The plurality of light emitting diodes 35g can be directed toward a center of the luminaire 32g and generally at the central longitudinal axis 58g. The plurality of light emitting diodes 35g can be mounted on printed circuit boards.

The mounting ring 12g and the luminaire 32g can be interconnected by moving each of the plurality posts 40g past each of the plurality of distal ends of the locking arms 24g along the central longitudinal axis 58g and rotating the mounting ring 12g and the luminaire 32g relative to one another in a first angular direction about the central longitudinal axis 58g.

The luminaire 32g can include the pan 21g and also a lens 25g, a diffuser 27g, and a light guide 29g with a backing of reflective paper. The pan 21g can have the perimeter wall 37g extending about a central longitudinal axis 58g. The perimeter wall 37g can take any desired shape, including square, circular, oval, rectangular, or any other shape. The pan 21g can also have bottom lip projecting from the perimeter wall toward the central longitudinal axis 58g. The pan 21g can have a vertical height along the central longitudinal axis 58g between a bottom surface and a top surface. The pan 21g is proximate with the top surface of the pan 21g when the luminaire 32g is assembled.

A cavity can be defined vertically between the bottom lip of the casing 14g and the pan 21g. The lens 25g, diffuser 27g, and the light guide 29g with the backing of reflective paper 22g can be disposed in the cavity and rest on the bottom lip. The lens 25g can be at least partially transparent and can be formed from glass or 5VA plastic. The diffuser 27g and the light guide 29g can confront and contact one another.

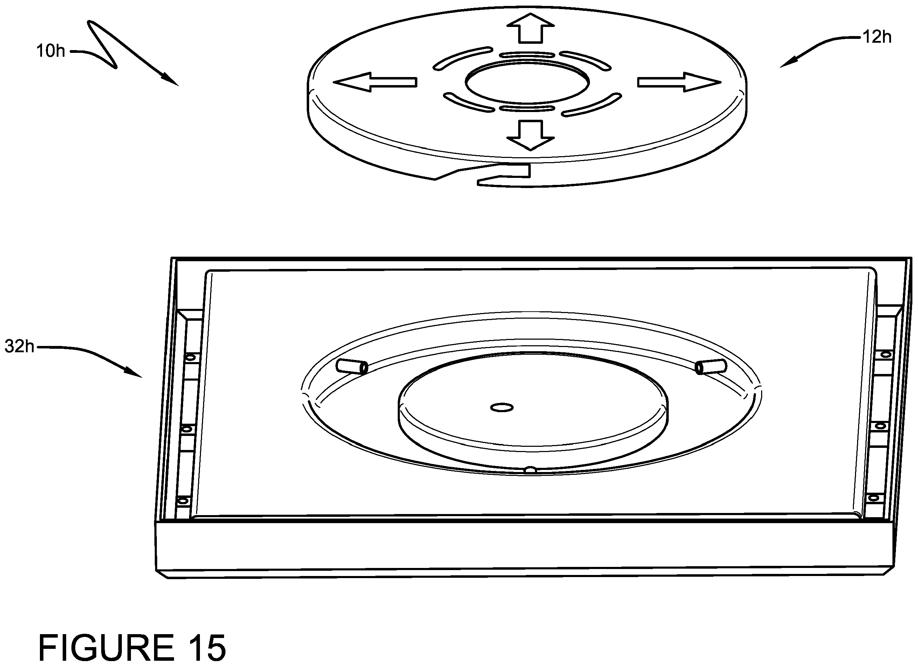

Figure 15 is a perspective view of another embodiment of the present disclosure. A lighting arrangement 10h can include a mounting ring 12h and a luminaire 32h. The lighting arrangement 10h can be square, but otherwise similar to the lighting arrangement 10g.

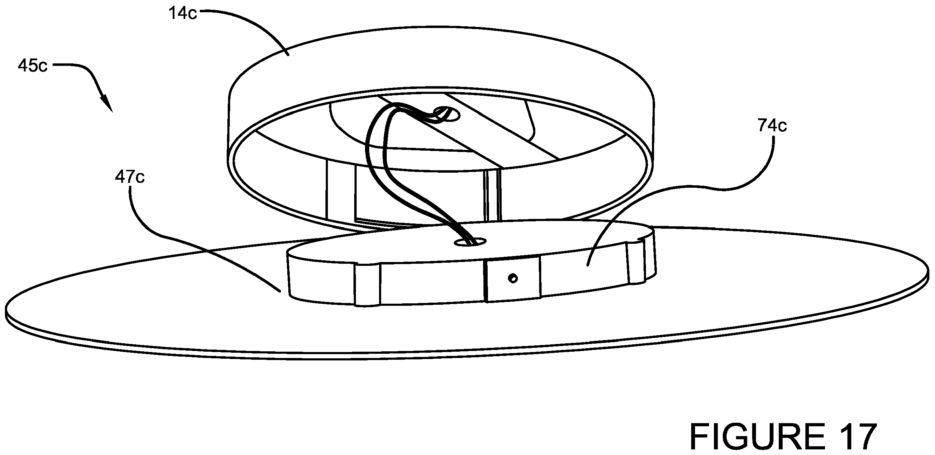

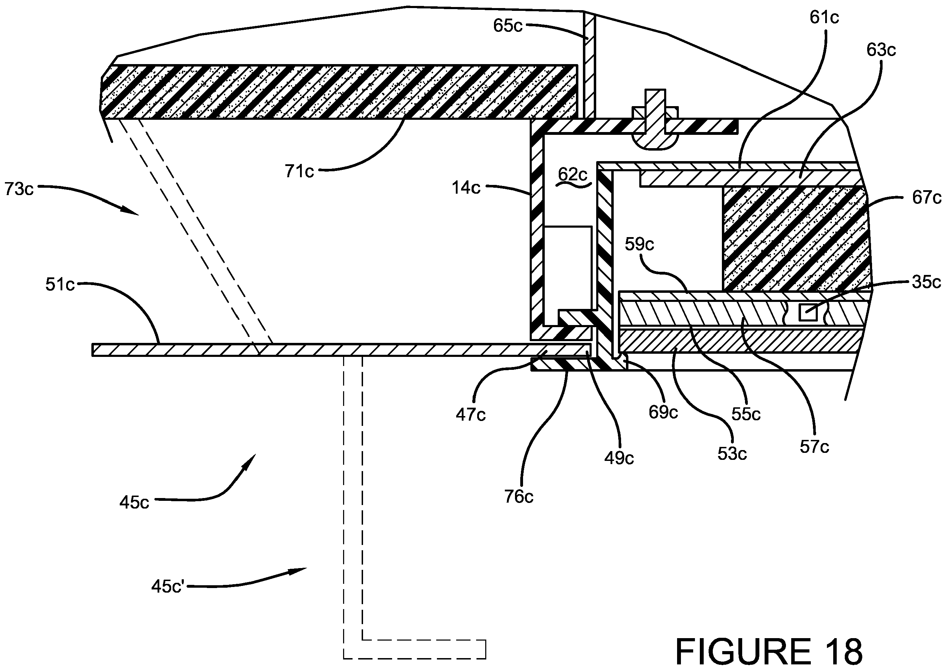

Another feature of the present disclosure is illustrated in Figures 17 - 19. Referring now to Figures 17 and 18, the lighting arrangement 10c can also include a shade 45c having a collar portion 47c with an aperture 49c at least partially surrounding the body portion 74c and positioned between the upwardly-facing surface 82c of the flange portion 76c and the downwardly-facing surface 66c of the circular wall 14c when the mounting ring 12c and the luminaire 32c are interconnected. The shade 45c can also include a shading portion 51c extending radially outward from the collar portion 47c and radially beyond the flange portion 76c of the housing assembly 34c relative to the central longitudinal axis 58c.

Referring now to Figure 18, the lighting arrangement 10c can be mounted to a junction box 65c proximate to a ceiling 71c can include a lens 53c, a diffuser 55c, a light guide 57c with a backing of reflective paper 59c, a plurality of light emitting diodes 35c, a backing plate 61c, and a driving circuit 63c. The lens 53c, diffuser 55c, and the light guide 57c with the backing of reflective paper 59c can be disposed within the body portion 74c and rest on a bottom lip 69c defined by the circular wall 14c. The lens 53c can be at least partially transparent and can be formed from glass or 5VA plastic. The diffuser 55c can be positioned between the driving circuit 63c and the bottom lip 69c along the axis 58c. The light guide 57c can be positioned between the driving circuit 63c and the diffuser 55c along the axis 58c. The diffuser 55c and the light guide 57c can confront and contact one another. A gap can be defined between the driving circuit 63c and the diffuser 55c along the axis 58c. A block 67c of EVA foam can be positioned between the driving circuit 63c and the light guide 57c/backing of reflective paper 59c along the axis 58c.

The light guide 55c has been partially cut-away in Figure 18 to show one of the light emitting diodes 35c. The plurality of light emitting diodes 35c can be disposed about the inwardly-facing surface of the body portion 74c. The plurality of light emitting diodes 35c can be directed at a side of the light guide 57c and generally at the axis 58c. The plurality of light emitting diodes 35c can be mounted on one or more printed circuit boards.

The shade 45c can be translucent or opaque and can shield an area from receiving light. The exemplary shade 45c shields a portion of the ceiling 71c. The exemplary collar portion 47c and exemplary shading portion 51c are flat and coplanar with respect to one another. Thus, the exemplary shade 45c does not extend beyond the flange portion along the central longitudinal axis 58c and does not extend beyond the upwardly-facing surface 68c of the circular wall 14c along the central longitudinal axis 58c. It is noted that perimeter of the shade 45c, when viewed in a plane perpendicular to the axis 58c, can take any shape including circular, oval, star, flower, sun, or irregular. It is noted that the shade 45c can be any color and can bare images or patterns of color.

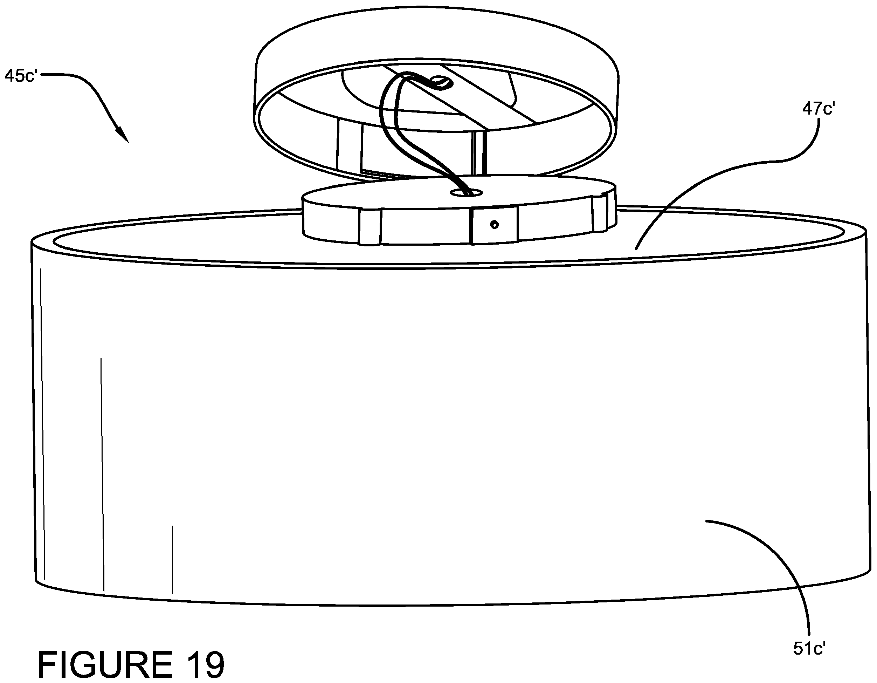

Figure 18 shows, in phantom, other shapes a shade can take in other embodiments of the present disclosure. A shade can extend to the ceiling as referenced at 73c. Figure 19 shows an alternative shade 45c' having a drum shape. A shading portion 51c' of the shade 45c' extends downward, beyond the collar portion 47c' and the flange portion 76c along the central longitudinal axis 58c. The profile of the shade 45c' is shown in phantom in Figure 18. It is noted that the shade 45c' can be partially translucent and partially opaque and can bare color patterns or images.

## Claims

1. A lighting arrangement (10) comprising:
a mounting ring (12) configured to extend along a central longitudinal axis (58) and having
a plurality of mounting apertures (22) and a circular wall (14), said circular wall having an inwardly-facing surface (60) configured to encircle said central longitudinal axis (58) and define a radial boundary of a cavity (62), said circular wall (14) also having an outwardly-facing surface (64) opposite to said inwardly-facing surface (60) with a thickness of said circular wall defined between said inwardly-facing surface and said outwardly-facing surface, said circular wall configured to extend a height along said central longitudinal axis between a downwardly-facing surface (66) and an upwardly-facing surface (68);
a luminaire (32) having a housing assembly (34) and a light emitter, said housing assembly configured to at least partially enclose said light emitter, said housing assembly configured to be at least partially received in said cavity;
a plurality of locking arms (24) each fixedly associated with one of said circular wall (14) and said housing assembly (34), each of said plurality of locking arms configured to include
an axial portion (26) configured to extend along said central longitudinal axis and a circumferential portion (28) configured to extend about said central longitudinal axis,
each of said circumferential portions (28) configured to extend from a first end at an intersection with one of said axial portions (26) to a respective second end distal relative to said first end, and
each of said circumferential portions (28) having
an upper face configured to be directed in the same direction as said upwardly-facing surface and
a lower face directed in the same direction as said downwardly-facing surface;
a plurality of posts (40) each fixedly associated with the other one of said circular wall and
said housing assembly (34), each of said plurality of posts (40) configured to extend away from said other of said circular wall and said housing assembly along a respective post axis that intersects said central longitudinal axis, a width of each post defined in a direction about said central longitudinal axis; and
wherein said mounting ring (12) and said luminaire (32) are configured to be interconnected by
moving each of said plurality posts (40) past each of said plurality of second ends of the circumferential portion (28) along said central longitudinal axis and then rotating said mounting ring (12) and said luminaire (32) relative to one another in a first angular direction about said central longitudinal axis (56) and
sliding each of said plurality of posts (40) along one of said upper and lower faces of the circumferential portion (28) such that said one of said upper and lower faces is configured to define a sliding surface (70),
wherein:
said housing assembly (34) further comprises
a body portion (74c) configured to extend between top and bottom ends along said central longitudinal axis and
a flange portion (76c) configured to extend radially-outward from said bottom end of said body portion and having an upwardly-facing surface and a downwardly-facing surface,
wherein said body portion (74c) is configured to be at least partially received in said cavity and said upwardly-facing surface of said flange portion and said downwardly-facing surface of said circular wall are arranged to be directed toward one another when said mounting ring and said luminaire are interconnected; and
said lighting arrangement further comprises
a shade (45c) having a collar portion (47c) with an aperture (49c) configured to at least partially surround said body portion and configured to be positioned between said upwardly-facing surface of said flange portion (76c) and said downwardly-facing surface of said circular wall when said mounting ring and said luminaire are interconnected,
said shade (45c) further comprising a shading portion (51c) configured to extend radially outward from said collar portion (47c) and radially beyond said flange portion (76c) of said housing assembly relative to said central longitudinal axis, said shade arrangeable to shield a portion of a ceiling to which the lighting arrangement is mountable.

2. The lighting arrangement of claim 1 wherein said shading portion (51c) of said shade is further configured to extend beyond said flange portion (76c) along said central longitudinal axis.

3. The lighting arrangement of claim 1 or 2 wherein said shading portion of said shade is further configured to extend beyond said collar portion (47c) along said central longitudinal axis.

4. The lighting arrangement of claim 1, 2 or 3 wherein most of said body portion is disposed in said cavity.

5. The lighting arrangement of any preceding claim:
wherein said sliding surface (70) includes
a first area (392c) that is substantially flat in side profile and configured to extend a first arcuate length about said central longitudinal axis,
a second area (192c) that is substantially flat in side profile and configured to extend a second arcuate length about said central longitudinal axis, and
at least one protuberance (290c) configured to create a gap between said first area and said second area and extend a third arcuate length about said central longitudinal axis;
wherein, for at least one of said plurality of posts (40) and said respective sliding surface, said at least one of said plurality of posts is configured to slide over said first area and said at least one protuberance and said second area of said respective sliding surface; and
wherein said third arcuate length is less than both of said first arcuate length and said second arcuate length.

6. The lighting arrangement of claim 5 wherein said sliding surface further comprises:
a third area (92c) that is substantially flat in side profile and extends a fourth arcuate length about said central longitudinal axis; and
at least another protuberance (190c) between said second area and said third area and configured to extend a fifth arcuate length about said central longitudinal axis.

7. The lighting arrangement of claim 6 wherein said fifth arcuate length is less than both of said second arcuate length and said fourth arcuate length.

8. The lighting arrangement of claim 5 wherein a width of said at least one of said plurality of posts is greater than said third arcuate length.

9. The lighting arrangement of claim 5 wherein said at least one protuberance is further defined as a positive protuberance configured to extend above and elevated over said first area (392c) and said second area (192c) with respect to said central longitudinal axis.

10. The lighting arrangement of claim 5 wherein said at least one protuberance is further defined as a negative protuberance configured to extend below and be vertically recessed with respect to said first area and said second area relative to said central longitudinal axis.

11. The lighting arrangement of claim 6 wherein said sliding surface is defined by one of said upper faces.

12. The lighting arrangement of claim 1 wherein said sliding surface further comprises:
a first ramp portion having a first rate of incline and configured to extend about said central longitudinal axis a first angular distance; and
a second ramp portion having a second rate of incline and configured to extend about said central longitudinal axis a second angular distance, said second rate of incline different than said first rate of incline.

13. The lighting arrangement of claim 12 wherein said post engages said first ramp portion before said second ramp portion and wherein said first rate of incline is greater than said second rate of incline.

14. The lighting arrangement of claim 12 wherein said first rate of incline is greater than said second rate of incline and wherein said first angular distance is less than said second angular distance.

## Patentansprüche

1. Beleuchtungseinrichtung (10), die Folgendes beinhaltet:
einen Montagering (12), der konfiguriert ist, um sich entlang einer mittleren Längsachse (58) zu erstrecken, und eine Vielzahl von Montageöffnungen (22) und eine kreisförmige Wand (14) aufweist, wobei die kreisförmige Wand eine nach innen weisende Oberfläche (60) aufweist, die konfiguriert ist, um die mittlere Längsachse (58) einzukreisen und eine radiale Begrenzung eines Hohlraums (62) zu definieren, wobei die kreisförmige Wand (14) auch eine nach außen weisende Oberfläche (64) gegenüber der nach innen weisenden Oberfläche (60) aufweist, wobei eine Dicke der kreisförmigen Wand zwischen der nach innen weisenden Oberfläche und der nach außen weisenden Oberfläche definiert ist, wobei die kreisförmige Wand konfiguriert ist, um sich über eine Höhe entlang der zentralen Mittelachse zwischen einer nach unten weisenden Oberfläche (66) und einer nach oben weisenden Oberfläche (68) zu erstrecken;
ein Beleuchtungskörper (32), der eine Gehäusebaugruppe (34) und einen Lichtsender aufweist, wobei die Gehäusebaugruppe konfiguriert ist, um den Lichtsender mindestens teilweise zu umschließen, wobei die Gehäusebaugruppe konfiguriert ist, um mindestens teilweise in dem Hohlraum aufgenommen zu sein;
eine Vielzahl von Verriegelungsarmen (24), die jeweils mit einer der kreisförmigen Wand (14) und der Gehäusebaugruppe (34) fest assoziiert sind, wobei jeder der Vielzahl von Verriegelungsarmen konfiguriert ist, um Folgendes zu umfassen:
einen axialen Abschnitt (26), der konfiguriert ist, um sich entlang der mittleren Längsachse zu erstrecken, und einen Umfangsabschnitt (28), der konfiguriert ist, um sich um die mittlere Längsachse zu erstrecken,
wobei jeder der Umfangsabschnitte (28) konfiguriert ist, um sich von einem ersten Ende einer Kreuzungsstelle mit einem der axialen Abschnitte (26) zu einem jeweiligen zweiten Ende, distal in Bezug auf das erste Ende, zu erstrecken und
jeder der Umfangsabschnitte (28) Folgendes aufweist:
eine obere Fläche, die konfiguriert ist, um in die gleiche Richtung wie die nach oben weisende Oberfläche gerichtet zu sein, und
eine untere Fläche, die in die gleiche Richtung wie die nach unten weisende Oberfläche gerichtet ist;
eine Vielzahl von Pfosten (40), die jeweils mit der anderen der kreisförmigen Wand und der Gehäusebaugruppe (34) fest assoziiert sind, wobei jeder der Vielzahl von Pfosten (40) konfiguriert ist, um sich von der anderen der kreisförmigen Wand und der Gehäusebaugruppe entlang einer jeweiligen Pfostenachse, die die mittlere Längsachse schneidet, weg zu erstrecken, wobei eine Breite von jedem Pfosten in einer Richtung um die mittlere Längsachse definiert ist; und
wobei der Montagering (12) und der Beleuchtungskörper (32) konfiguriert sind, um miteinander verbunden zu werden durch: Bewegen von jedem der Vielzahl von Pfosten (40) vorbei an jedem der Vielzahl von zweiten Enden des Umfangsabschnitts (28) entlang der mittleren Längsachse und dann Drehen des Montagerings (12) und des Beleuchtungskörpers (32) in Bezug zueinander in einer ersten Winkelrichtung um die mittlere Längsachse (56) und Gleiten von jedem der Vielzahl von Pfosten (40) entlang einer der oberen und unteren Fläche des Umfangsabschnitts (28), sodass die eine der oberen und unteren Fläche konfiguriert ist, um eine Gleitoberfläche (70) zu definieren,
wobei:
die Gehäusebaugruppe (34) ferner Folgendes beinhaltet: einen Körperabschnitt (74c), der konfiguriert ist, um sich zwischen Ober- und Unterenden entlang der mittleren Längsachse zu erstrecken, und einen Flanschabschnitt (76c), der konfiguriert ist, um sich von dem Unterende des Körperabschnitts radial nach außen zu erstrecken, und eine nach oben weisende Oberfläche und eine nach unten weisende Oberfläche aufweist,
wobei der Körperabschnitt (74c) konfiguriert ist, um mindestens teilweise in dem Hohlraum aufgenommen zu sein, und die nach oben weisende Oberfläche des Flanschabschnitts und die nach unten weisende Oberfläche der kreisförmigen Wand angeordnet sind, um zueinander hin gerichtet zu sein, wenn der Montagering und der Beleuchtungskörper miteinander verbunden sind; und
die Beleuchtungseinrichtung ferner Folgendes beinhaltet:
einen Schirm (45c), der einen Kranzabschnitt (47c) mit einer Öffnung (49c) aufweist, der konfiguriert ist, um den Körperabschnitt mindestens teilweise zu umgeben, und konfiguriert ist, um zwischen der nach oben weisenden Oberfläche des Flanschabschnitts (76c) und der nach unten weisenden Oberfläche der kreisförmigen Wand positioniert zu sein, wenn der Montagering und der Beleuchtungskörper miteinander verbunden sind, wobei der Schirm (45c) ferner einen Abschattungsabschnitt (51c) beinhaltet, der konfiguriert ist, um sich radial von dem Kranzabschnitt (47c) nach außen und radial über den Flanschabschnitt (76c) der Gehäusebaugruppe in Bezug auf die mittlere Längsachse hinaus zu erstrecken, wobei der Schirm angeordnet werden kann, um einen Abschnitt einer Decke, an die die Beleuchtungseinrichtung montiert werden kann, abzuschirmen.

2. Beleuchtungseinrichtung gemäß Anspruch 1, wobei der Abschattungsabschnitt (51c) des Schirms ferner konfiguriert ist, um sich über den Flanschabschnitt (76c) hinaus entlang der mittleren Längsachse zu erstrecken.

3. Beleuchtungseinrichtung gemäß Anspruch 1 oder 2, wobei der Abschattungsabschnitt des Schirms ferner konfiguriert ist, um sich über den Kranzabschnitt (47c) hinaus entlang der mittleren Längsachse zu erstrecken.

4. Beleuchtungseinrichtung gemäß Anspruch 1, 2 oder 3, wobei sich der Großteil des Körperabschnitts in dem Hohlraum befindet.

5. Beleuchtungseinrichtung gemäß einem vorhergehenden Anspruch:
wobei die Gleitfläche (70) Folgendes umfasst:
einen ersten Bereich (392c), der im Wesentlichen im Seitenprofil flach ist und konfiguriert ist, um sich über eine erste bogenförmige Länge um die mittlere Längsachse zu erstrecken, einen zweiten Bereich (192c), der im Wesentlichen im Seitenprofil flach ist und konfiguriert ist, um sich über eine zweite bogenförmige Länge um die mittlere Längsachse zu erstrecken, und mindestes eine Protuberanz (290c), die konfiguriert ist, um einen Spalt zwischen dem ersten Bereich und dem zweiten Bereich zu erzeugen und sich über eine dritte bogenförmige Länge um die mittlere Längsachse zu erstrecken;
wobei, für mindestens einen von der Vielzahl von Pfosten (40) und die jeweilige Gleitfläche, der mindestens eine von der Vielzahl von Pfosten konfiguriert ist, um über den ersten Bereich und die mindestens eine Protuberanz und den zweiten Bereich der jeweiligen Gleitfläche zu gleiten; und
wobei die dritte bogenförmige Länge weniger als sowohl die erste bogenförmige Länge als auch die zweite bogenförmige Länge ist.

6. Beleuchtungseinrichtung gemäß Anspruch 5, wobei die Gleitfläche ferner Folgendes beinhaltet: einen dritten Bereich (92c), der im Wesentlichen im Seitenprofil flach ist und sich über eine vierte bogenförmige Länge um die mittlere Längsachse erstreckt; und
mindestens eine andere Protuberanz (190c) zwischen dem zweiten Bereich und dem dritten Bereich und konfiguriert, um sich über eine fünfte bogenförmige Länge um die mittlere Längsachse zu erstrecken.

7. Beleuchtungseinrichtung gemäß Anspruch 6, wobei die fünfte bogenförmige Länge weniger als sowohl die zweite bogenförmige Länge als auch die vierte bogenförmige Länge ist.

8. Beleuchtungseinrichtung gemäß Anspruch 5, wobei eine Breite des mindestens einen der Vielzahl von Pfosten größer als die dritte bogenförmige Länge ist.

9. Beleuchtungseinrichtung gemäß Anspruch 5, wobei die mindestens eine Protuberanz ferner als positive Protuberanz definiert ist, die konfiguriert ist, um sich über und erhöht über den ersten Bereich (392c) und den zweiten Bereich (192c) bezogen auf die mittlere Längsachse zu erstrecken.

10. Beleuchtungseinrichtung gemäß Anspruch 5, wobei die mindestens eine Protuberanz als negative Protuberanz ferner definiert ist, die konfiguriert ist, um sich bezogen auf die erste Fläche und die zweite Fläche in Bezug auf die mittlere Längsachse unterhalb zu erstrecken und vertikal vertieft zu sein.

11. Beleuchtungseinrichtung gemäß Anspruch 6, wobei die Gleitfläche durch eine von den oberen Flächen definiert ist.

12. Beleuchtungseinrichtung gemäß Anspruch 1, wobei die Gleitfläche ferner Folgendes beinhaltet:
einen ersten Rampenabschnitt, der eine erste Neigungsrate aufweist und konfiguriert ist, um sich um die zentrale Längsachse über einen ersten Winkelabstand zu erstrecken; und
einen zweiten Rampenabschnitt, der eine zweite Neigungsrate aufweist und konfiguriert ist, um sich um die zentrale Längsachse über einen zweiten Winkelabstand zu erstrecken, wobei sich die zweite Neigungsrate von der ersten Neigungsrate unterscheidet.

13. Beleuchtungseinrichtung gemäß Anspruch 12, wobei der Pfosten den ersten Rampenabschnitt vor dem zweiten Rampenabschnitt in Eingriff nimmt und wobei die erste Neigungsrate größer als die zweite Neigungsrate ist.

14. Beleuchtungseinrichtung gemäß Anspruch 12, wobei die erste Neigungsrate größer als die zweite Neigungsrate ist und wobei der erste Winkelabstand weniger als der zweite Winkelabstand ist.

## Revendications

1. Dispositif d'éclairage (10) comportant :
un anneau de montage (12) configuré pour s'étendre le long d'un axe longitudinal central (58) et ayant
une pluralité d'ouvertures de montage (22) et une paroi circulaire (14),
ladite paroi circulaire ayant une surface orientée vers l'intérieur (60) configurée pour encercler ledit axe longitudinal central (58) et pour définir une limite radiale d'une cavité (62),
ladite paroi circulaire (14) ayant aussi une surface orientée vers l'extérieur (64) opposée par rapport à ladite surface orientée vers l'intérieur (60) avec une épaisseur de ladite paroi circulaire définie entre ladite surface orientée vers l'intérieur et ladite surface orientée vers l'extérieur,
ladite paroi circulaire étant configurée pour s'étendre sur une hauteur le long dudit axe longitudinal central entre une surface orientée vers le bas (66) et une surface orientée vers le haut (68) ;
un luminaire (32) ayant un ensemble boîtier (34) et un émetteur de lumière, ledit ensemble boîtier étant configuré pour renfermer au moins partiellement ledit émetteur de lumière, ledit ensemble boîtier étant configuré pour être reçu au moins partiellement dans ladite cavité ;
une pluralité de pattes de verrouillage (24) associées, chacune, de manière fixe à l'un parmi ladite paroi circulaire (14) et ledit ensemble boîtier (34), chacune de ladite pluralité de pattes de verrouillage étant configurée pour comprendre
une partie axiale (26) configurée pour s'étendre le long dudit axe longitudinal central et une partie circonférentielle (28) configurée pour s'étendre autour dudit axe longitudinal central,
chacune desdites parties circonférentielles (28) étant configurée pour s'étendre depuis une première extrémité au niveau d'une intersection avec l'une desdites parties axiales (26) jusqu'à une deuxième extrémité respective distale par rapport à ladite première extrémité, et
chacune desdites parties circonférentielles (28) ayant une face supérieure configurée pour être dirigée dans la même direction que ladite surface orientée vers le haut et une face inférieure dirigée dans la même direction que ladite surface orientée vers le bas ;
une pluralité de montants (40) associés, chacun, de manière fixe audit un autre parmi ladite paroi circulaire et ledit ensemble boîtier (34), chacun de ladite pluralité de montants (40) étant configuré pour s'étendre à l'opposé dudit autre parmi ladite paroi circulaire et ledit ensemble boîtier le long d'un axe de montant respectif qui croise ledit axe longitudinal central, une largeur de chaque montant étant définie dans une direction autour dudit axe longitudinal central ; et
dans lequel ledit anneau de montage (12) et ledit luminaire (32) sont configurés pour être interconnectés en déplaçant chacun de ladite pluralité de montants (40) au-delà de chacune de ladite pluralité de deuxièmes extrémités de la partie circonférentielle (28) le long dudit axe longitudinal central et puis en faisant tourner ledit anneau de montage (12) et ledit luminaire (32) l'un par rapport à l'autre dans une première direction angulaire autour dudit axe longitudinal central (56) et en
faisant coulisser chacun de ladite pluralité de montants (40) le long de l'une desdites faces supérieure et inférieure de la partie circonférentielle (28) de telle sorte que ladite l'une desdites faces supérieure et inférieure est configurée pour définir une surface coulissante (70),
dans lequel :
ledit ensemble boîtier (34) comporte par ailleurs
une partie corps (74c) configurée pour s'étendre entre des extrémités du haut et du bas le long dudit axe longitudinal central et
une partie bride (76c) configurée pour s'étendre vers l'extérieur dans le sens radial depuis ladite extrémité du bas de ladite partie corps et ayant une surface orientée vers le haut et une surface orientée vers le bas,
dans lequel ladite partie corps (74c) est configurée pour être reçue au moins partiellement dans ladite cavité et ladite surface orientée vers le haut de ladite partie bride et ladite surface orientée vers le bas de ladite paroi circulaire sont agencées pour être dirigées l'une vers l'autre quand ledit anneau de montage et ledit luminaire sont interconnectés ; et
ledit dispositif d'éclairage comporte par ailleurs
un abat-jour (45c) ayant une partie collerette (47c) avec une ouverture (49c) configurée pour entourer au moins partiellement ladite partie corps et configurée pour être positionnée entre ladite surface orientée vers le haut de ladite partie bride (76c) et ladite surface orientée vers le bas de ladite paroi circulaire quand ledit anneau de montage et ledit luminaire sont interconnectés,
ledit abat-jour (45c) comportant par ailleurs une partie ombrage (51c) configurée pour s'étendre vers l'extérieur dans le sens radial depuis ladite partie collerette (47c) et dans le sens radial au-delà de ladite partie bride (76c) dudit ensemble boîtier relativement audit axe longitudinal central, ledit abat-jour étant en mesure d'être agencé pour protéger une partie d'un plafond au niveau duquel le dispositif d'éclairage est en mesure d'être monté.

2. Dispositif d'éclairage selon la revendication 1, dans lequel ladite partie ombrage (51c) dudit abat-jour est par ailleurs configurée pour s'étendre au-delà de ladite partie bride (76c) le long dudit axe longitudinal central.

3. Dispositif d'éclairage selon la revendication 1 ou la revendication 2, dans lequel ladite partie ombrage dudit abat-jour est par ailleurs configurée pour s'étendre au-delà de ladite partie collerette (47c) le long dudit axe longitudinal central.

4. Dispositif d'éclairage selon la revendication 1, la revendication 2 ou la revendication 3, dans lequel la plus grande partie de ladite partie corps est disposée dans ladite cavité.

5. Dispositif d'éclairage selon l'une quelconque des revendications précédentes :
dans lequel ladite surface coulissante (70) comprend :
une première zone (392c) qui est sensiblement plate quand vue de profil et configurée pour s'étendre sur une première longueur arquée autour dudit axe longitudinal central,
une deuxième zone (192c) qui est sensiblement plate quand vue de profil et configurée pour s'étendre sur une deuxième longueur arquée autour dudit axe longitudinal central, et
au moins une partie saillante (290c) configurée pour créer un espace entre ladite première zone et ladite deuxième zone et pour s'étendre sur une troisième longueur arquée autour dudit axe longitudinal central ;
dans lequel, pour au moins l'un de ladite pluralité de montants (40) et ladite surface coulissante respective, ledit au moins l'un de ladite pluralité de montants est configuré pour coulisser sur ladite première zone et ladite au moins une partie saillante et ladite deuxième zone de ladite surface coulissante respective ; et
dans lequel ladite troisième longueur arquée est inférieure à la fois par rapport à ladite première longueur arquée et par rapport à ladite deuxième longueur arquée.

6. Dispositif d'éclairage selon la revendication 5, dans lequel ladite surface coulissante comporte par ailleurs :
une troisième zone (92c) qui est sensiblement plate quand vue de profil et qui s'étend sur une quatrième longueur arquée autour dudit axe longitudinal central ; et
au moins une autre partie saillante (190c) entre ladite deuxième zone et ladite troisième zone et configurée pour s'étendre sur une cinquième longueur arquée autour dudit axe longitudinal central.

7. Dispositif d'éclairage selon la revendication 6, dans lequel ladite cinquième longueur arquée est inférieure à la fois par rapport à ladite deuxième longueur arquée et par rapport à ladite quatrième longueur arquée.

8. Dispositif d'éclairage selon la revendication 5, dans lequel une largeur dudit au moins l'un de ladite pluralité de montants est supérieure par rapport à ladite troisième longueur arquée.

9. Dispositif d'éclairage selon la revendication 5, dans lequel ladite au moins une partie saillante est par ailleurs définie comme étant une partie saillante positive configurée pour s'étendre au-dessus de, et de manière élevée par-dessus, ladite première zone (392c) et ladite deuxième zone (192c) par rapport audit axe longitudinal central.

10. Dispositif d'éclairage selon la revendication 5, dans lequel ladite au moins une partie saillante est par ailleurs définie comme étant une partie saillante négative configurée pour s'étendre en-dessous de, et être verticalement en retrait par rapport à, ladite première zone et ladite deuxième zone relativement audit axe longitudinal central.

11. Dispositif d'éclairage selon la revendication 6, dans lequel ladite surface coulissante est définie par l'une desdites faces supérieures.

12. Dispositif d'éclairage selon la revendication 1, dans lequel ladite surface coulissante comporte par ailleurs :
une première partie formant rampe ayant un premier taux d'inclinaison et configurée pour s'étendre autour dudit axe longitudinal central à une première distance angulaire ; et
une deuxième partie formant rampe ayant un deuxième taux d'inclinaison et configurée pour s'étendre autour dudit axe longitudinal central à une deuxième distance angulaire, ledit deuxième taux d'inclinaison étant différent dudit premier taux d'inclinaison.

13. Dispositif d'éclairage selon la revendication 12, dans lequel ledit montant entre en prise avec ladite première partie formant rampe avant ladite deuxième partie formant rampe et dans lequel ledit premier taux d'inclinaison est supérieur par rapport audit deuxième taux d'inclinaison.

14. Dispositif d'éclairage selon la revendication 12, dans lequel ledit premier taux d'inclinaison est supérieur par rapport audit deuxième taux d'inclinaison et dans lequel ladite première distance angulaire est inférieure par rapport à ladite deuxième distance angulaire.
